(19) Europäisches Patentamt
European Patent Office
Office européen des brevets

(11) Veröffentlichungsnummer: **0 401 683 A2**

# (12) EUROPÄISCHE PATENTANMELDUNG

(21) Anmeldenummer: **90110350.7**

(22) Anmeldetag: **31.05.90**

(51) Int. Cl.5: **C08L 83/08, C08L 101/02, C08K 13/02**

Die Bezeichnung der Erfindung wurde geändert (Richtlinien für die Prüfung im EPA, A-III, 7.3).

(30) Priorität: **05.06.89 DE 3918328**

(43) Veröffentlichungstag der Anmeldung: **12.12.90 Patentblatt 90/50**

(84) Benannte Vertragsstaaten: **DE FR GB IT**

(71) Anmelder: **WACKER-CHEMIE GMBH**
**Prinzregentenstrasse 22**
**D-8000 München 22(DE)**

(72) Erfinder: **Herzig, Christian, Dr. Dipl.-Chem.**
**Schröckenbauer 1**
**D-8221 Taching(DE)**
Erfinder: **Deubzer, Bernward, Dr. Dipl.-Chem.**
**Virchowstrasse 14**
**D-8263 Burghausen(DE)**
Erfinder: **Esterbauer, Josef**
**Unterweitzberg 34**
**A-5122 Hochburg(AT)**

## (54) Wärmehärtbare, Siliziumverbindungen enthaltende Zusammensetzungen.

(57) Die erfindungsgemäßen wärmehärtbaren Zusammensetzungen sind solche, die als wesentliche Bestandteile

(A) mindestens eine mercaptoalkylgruppenhaltige Verbindung, die je Molekül mindestens 2 SiC-gebundene Reste der allgemeinen Formel

$HS\text{-}R^2\text{-}$ (I),

wobei $R^2$ ein zweiwertiger Kohlenwasserstoffrest mit 1 bis 8 Kohlenstoffatom(en) je Rest bedeutet, enthält, ausgewählt aus der Gruppe bestehend aus mercaptoalkylgruppenhaltigem Organopolysiloxan und Cokondensat von mercaptoalkylgruppenhaltiger, kondensationsfähige Gruppen aufweisender Organosiliciumverbindung und Hydroxylgruppen aufweisender, organischer Verbindung

(B) mindestens eine mit dem Bestandteil (A) verträgliche, vinylgruppenhaltige Verbindung, die je Molekül mindestens zwei Gruppen der allgemeinen Formel

$R^4CH=CR^3C(O)O\text{-}$ (II),

wobei $R^3$ ein Wasserstoffatom oder ein Methylrest und $R^4$ ein Wasserstoffatom oder ein Alkylrest mit 1 bis 3 Kohlenstoffatom(en) je Rest bedeutet,
enthält, und

(C) eine Mischung aus einer starken organischen Base ausgewählt aus der Gruppe der quaternären Ammoniumhydroxide, quaternären Ammoniumalkoxide, tertiären, sekundären und primären Amine und einer schwachen Protonensäure enthalten.

EP 0 401 683 A2

## Wärmehärtbare Zusammensetzungen

Die Erfindung betrifft wärmehärtbare Zusammensetzungen, die vinylgruppenhaltige Verbindung und mercaptoalkylgruppenhaltige Verbindung ausgewählt aus der Gruppe bestehend aus mercaptoalkylgruppenhaltigem Organopolysiloxan und Cokondensat von mercaptoalkylgruppenhaltiger, kondensationsfähige Gruppen aufweisender Organosiliciumverbindung und Hydroxygruppen aufweisender, organischer Verbindung enthalten, und deren Verwendung zur Herstellung von Überzügen.

Aus US-A 4 070 526 (ausgegeben 24. Januar 1978, J. Pfenning et al., Dow Corning Corporation) sind durch Bestrahlung härtbare Diorganopolysiloxanformmassen, die

(A) mercaptoalkylgruppenhaltiges Diorganopolysiloxan

(B) vinylgruppenhaltiges Organopolysiloxan

(C) Vinylmonomeres und

(D) Photosensibilisator enthalten, bekannt. Die Massen dienen zur Herstellung von Klebstoff abweisenden Überzügen. Die Vernetzung der Massen erfolgt vorzugsweise durch Bestrahlen mit Ultraviolettlicht.

Es bestand die Aufgabe, Zusammensetzungen, die mercaptoalkylgruppenhaltige Verbindung ausgewählt aus der Gruppe bestehend aus mercaptoalkylgruppenhaltigem Organopolysiloxan und Cokondensat von mercaptoalkylgruppenhaltiger, kondensationsfähige Gruppen aufweisender Organosiliciumverbindung und Hydroxygruppen aufweisender, organischer Verbindung als Vernetzer für vinylgruppenhaltige Verbindung enthalten, bereitzustellen, die durch Wärme härtbar sind, wobei keine hohen Temperaturen notwendig sind, ein lagerbeständiges Katalysatorsystem enthalten, zur Herstellung von Überzügen geeignet sind und Lacke ergeben, die hart sind, auf der Unterlage auf der sie aufgebracht werden fest haften, eine sehr gute Benzinfestigkeit aufweisen und auch in tiefen Schichten gut aushärten. Diese Aufgabe wird durch die Erfindung gelöst.

Gegenstand der Erfindung sind wärmehärtbare Zusammensetzungen enthaltend als wesentliche Bestandteile

(A) mindestens eine mercaptoalkylgruppenhaltige Verbindung, die je Molekul mindestens 2 SiC-gebundene Reste der allgemeinen Formel

$HS\text{-}R^2\text{-}$ (I),

wobei $R^2$ ein zweiwertiger Kohlenwasserstoffrest mit 1 bis 8 Kohlenstoffatom(en) je Rest bedeutet, enthält, ausgewählt aus der Gruppe bestehend aus mercaptoalkylgruppenhaltigem Organopolysiloxan und Cokondensat von mercaptoalkylgruppenhaltiger, kondensationsfähige Gruppen aufweisender Organosiliciumverbindung und Hydroxylgruppen aufweisender, organischer Verbindung

(B) mindestens eine mit dem Bestandteil (A) verträgliche, vinylgruppenhaltige Verbindung, die je Molekül mindestens zwei Gruppen der allgemeinen Formel

$R^4CH=CR^3C(O)O\text{-}$ (II),

wobei $R^3$ ein Wasserstoffatom oder ein Methylrest und $R^4$ ein Wasserstoffatom oder ein Alkylrest mit 1 bis 3 Kohlenstoffatom(en) je Rest bedeutet,

enthält, und

(C) eine Mischung aus einer starken organischen Base ausgewählt aus der Gruppe der quaternären Ammoniumhydroxide, quaternären Ammoniumalkoxide, tertiären, sekundären und primären Amine und einer schwachen Protonensäure.

Bei dem erfindungsgemäß enthaltenen Bestandteil (A) handelt es sich vorzugsweise um ein Organopolysiloxan aus durchschnittlichen Einheiten der allgemeinen Formel

$$R_a(R^1O)_b(HSR^2)_cSiO_{\frac{4-(a+b+c)}{2}} \quad \text{(III)},$$

wobei R gleich oder verschieden ist und einen einwertigen, gegebenenfalls halogenierten Kohlenwasserstoffrest mit 1 bis 8 Kohlenstoffatom(en) je Rest bedeutet,

$R^1$ gleich oder verschieden ist und ein Wasserstoffatom oder einen Alkylrest mit 1 bis 6 Kohlenstoffatom(en) je Rest bedeutet,

$R^2$ einen zweiwertigen Kohlenwasserstoffrest mit 1 bis 8 Kohlenstoffatom(en) je Rest bedeutet,

a 0, 1, 2 oder 3, durchschnittlich 0,0 bis 2,0,

b 0, 1 oder 2, durchschnittlich 0,0 bis 2,0,

c 0, 1 oder 2, durchschnittlich 0,05 bis 1,0,
und die Summe a+b+c kleiner als 4, durchschnittlich die Summe a+b höchstens 2,0 ist,
mit der Maßgabe, daß je Molekül mindestens 2 Reste der Formel HS-$R^2$- enthalten sind.

Das Molekulargewicht des Bestandteils (A) beträgt vorzugsweise 170 bis 20 000 g/Mol, bevorzugt 400 bis 4000 g/Mol, und die Viskosität des Bestandteils (A) beträgt vorzugsweise 1 bis 10 000 mPa•s bei 25° C, bevorzugt 40 bis 1000 mPa•s bei 25° C.

Beispiele für Kohlenwasserstoffreste R sind Alkylreste, wie der Methyl-, Ethyl-, n- Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenylrest; Alkarylreste, wie o-, m-, p-Tolylreste, Xylylreste und Ethylphenylreste; Aralkylreste, wie der Benzylrest, der α-und der β-Phenylethylrest. Bevorzugt ist der Methyl- oder Phenylrest.

Beispiele für halogenierte Kohlenwasserstoffreste R sind Halogenalkylreste, wie der 3,3,3-Trifluor-n-propylrest, der 2,2,2,2′,2′,2′-Hexafluorisopropylrest, der Heptafluorisopropylrest, und Halogenarylreste, wie der o-, m-, und p-Chlorphenylrest.

Beispiele für Alkylreste $R^1$ sind der Methyl-, Ethyl-, n-Propyl-, iso-Propyl-, n-Butyl-, iso-Butyl-, und tert.-Butylrest sowie Pentyl- und Hexylreste.

Beispiele für Reste $R^2$ sind Alkylenreste, wie $-CH_2-$, $-CH_2CH_2-$, $-(CH_2)_3-$, $-(CH_2)_4-$, $-(CH_2)_6-$, $-CH_2CH(CH_3)CH_2-$; Cycloalkylenreste, wie der Cyclohexylenrest; und Arylenreste, wie der Phenylenrest.

Ein bevorzugtes Beispiel für die Gruppe der Formel (I) ist die der Formel
$HS(CH_2)_3-$.

Die mercaptoalkylgruppenhaltigen Organopolysiloxane sind durch Hydrolyse und Cokondensation von mercaptoalkylgruppenhaltigen Silanen der Formel
$R_d(HSR^2)Si(OR^1)_{3-d}$ (IV),
wobei R, $R^1$ und $R^2$ die oben dafür angegebene Bedeutung haben und d 0, 1 oder 2 ist,
gegebenenfalls mit mercaptoalkylgruppenfreien Silanen der Formel
$R_eSi(OR^1)_{4-e}$ (V),
wobei Y, R und $R^1$ die oben dafür angegebene Bedeutung haben und e 0, 1, 2 oder 3 ist,
oder durch Cokondensation und/oder Äquilibrierung von mercaptoalkylgruppenhaltigen Silanen der Formel (IV) mit mercaptoalkylgruppenfreien, kondensationsfähige Gruppen aufweisenden Organopolysiloxanen herstellbar.

Bei dem erfindungsgemäß enthaltenen Bestandteil (A) kann es sich aber auch um ein Cokondensat handeln, das aus einem mercaptoalkylgruppenhaltigen Alkoxysilan der Fomel (IV) und einer mit diesem Silan homogen kondensierbaren organischen Verbindung, die Hydroxylgruppen aufweist, hergestellt wurde, oder um ein Cokondensat, das aus einem mercaptoalkylgruppenhaltigen, Alkoxygruppen aufweisenden Organopolysiloxan der Formel (III) und einer mit diesem Organopolysiloxan homogen kondensierbaren organischen Verbindung, die Hydroxylgruppen aufweist, hergestellt wurde, handeln.

Beispiele für organische Verbindungen, die Hydroxylgruppen aufweisen und mit denen mercaptoalkylgruppenhaltige Alkoxysilane der Formel (IV) oder mercaptoalkylgruppenhaltige, Alkoxygruppen aufweisende Organopolysiloxane der Formel (III) homogen kondensierbar sind, sind mehrwertige Alkohole, wie Ethylenglykol, Propylenglykol, Neopentylglykol, Butylenglykol, Trimethylolpropan, Trimethylolethan, Pentaerythrit und Reaktionsprodukte von diesen mehrwertigen Alkoholen mit Carbonsäuren, wie Isophthalsäure, Terephthalsäure, Trimellitsäure und Adipinsäure, wobei die Hydroxygruppen der mehrwertigen Alkohole im stöchiometrischen Überschuß eingesetzt werden und die Reaktionsprodukte folglich Polyesterpolyole sind.

Bei dem erfindungsgemäß enthaltenen Bestandteil (B) handelt es sich vorzugsweise um eine vinylgruppenhaltige Verbindung ausgewählt aus der Gruppe der

(1) Ester von mehrwertigen Alkoholen und α,β-ungesättigten Carbonsäuren der allgemeinen Formel
$R^4CH=CR^3C(O)OH$ (II′),
wobei $R^3$ ein Wasserstoffatom oder ein Methylrest und $R^4$ ein Wasserstoffatom oder ein Alkylrest mit 1 bis 3 Kohlenstoffatom(en) je Rest bedeutet,

(2) Reaktionsprodukte von α,β-ungesättigten Carbonsäuren der allgemeinen Formel
$R^4CH=CR^3C(O)OH$ (II′),
wobei $R^3$ und $R^4$ die oben dafür angegebene Bedeutung haben, und OH-gruppenhaltigen organischen Polymeren ausgewählt aus der Gruppe der

(a) OH-gruppenhaltigen Polyether oder Polyester und

(b) OH-gruppenhaltige Copolymerisate von Hydroxyalkylestern der Acrylsäure oder Methacrylsäure, Styrol und gegebenenfalls Alkylestern von α,β-ungesättigten Mono- oder Dicarbonsäuren

(3) Reaktionsprodukte von α,β-ungesattigten Carbonsäuren der allgemeinen Formel

$R^4CH=CR^3C(O)OH$ (II′),

wobei $R^3$ und $R^4$ die oben dafür angegebene Bedeutung haben, und epoxidgruppenhaltigen Copolymerisaten von Epoxyalkylestern der Acrylsäure oder Methacrylsäure, Styrol und gegebenenfalls Alkylestern von α,β-ungesättigten Mono- oder Dicarbonsäuren

(4) Reaktionsprodukte von Hydroxyalkylestern von α,β-ungesättigten Carbonsäuren der allgemeinen Formel

$R^4CH=CR^3C(O)OH$ (II′),

wobei $R^3$ und $R^4$ die oben dafür angegebene Bedeutung haben, und isocyanatgruppenhaltigen organischen Polymeren oder Polyurethanen

(5) Reaktionsprodukte von Isocyanatoalkylestern von α,β-ungesättigten Carbonsäuren der allgemeinen Formel

$R^4CH=CR^3C(O)OH$ (II′),

wobei $R^3$ und $R^4$ die oben dafür angegebene Bedeutung haben, und OH-gruppenhaltigen organischen Polymeren und

(6) Mischungen von (1) und einem der Reaktionsprodukte (2) bis (5).

Bevorzugte Beispiele für die Vinylgruppe der Formel (II) bzw. für die entsprechende α,β-ungesättigte Carbonsäure der Formel (II′) sind die Acrylat- und Methacrylatgruppe bzw. die Acryl- und Methacrylsäure.

Als vinylgruppenhaltige Verbindung (B) werden bevorzugt Di-, Tri-, oder Tetra(meth)acrylate von mehrwertigen Alkoholen verwendet. Beispiele für mehrwertige Alkohole sind Alkandiole, wie Ethandiol, die verschiedenen Propan-, Butan-, Pentan-, Hexan-, und Octandiole, und die entsprechenden Ether; Alkantriole, wie Glycerin, Trimethylolpropan und Hexantriol; sowie Pentaerythrit, Dipentaerythrit, Sorbit und Polyvinylalkohol. Beispiele für solche Di-, Tri- oder Tetra(meth)acrylate sind 1,4-Butandioldiacrylat, Neopentylglycoldiacrylat, 1,6-Hexandioldiacrylat, Trimethylolpropantriacrylat, Pentaerythrittriacrylat und Pentaerythrittetraacrylat. Besonders bevorzugt werden Neopentylglycoldiacrylat oder Trimethylolpropantriacrylat verwendet. Die Herstellung solcher Acrylsäure- bzw. Methacrylsäureester ist in Houben-Weyl, Methoden der organischen Chemie, Band E 20, Seite 1142 (1987) beschrieben; die Herstellung von Trimethylolpropantriacrylat beispielsweise ist in Chemical Abstracts, Vol. 91, 192843 a (1979) beschrieben.

Beispiele für die oben genannten Reaktionsprodukte (2) bis (5) als Bestandteil (B) sind in US-A 3 066 112, US-A 3 539 526, US-A 3 774 305, US-A 4 102 856, DE-A 35 41 140, US-A 4 110 184 und in Journal of Coating Technology, Seite 24 (April 1985) beschrieben. Ein bevorzugtes Beispiel für die Reaktionsprodukte (2) bis (5) ist ein Reaktionsprodukt von Acryl- oder Methacrylsäure und einem epoxidgruppenhaltigen Copolymerisat, das durch Copolymerisation von Glycidylmethacrylat mit Styrol und Dimethylmaleinat hergestellt wurde. Verfahren zu seiner Herstellung sind in DE-A 35 41 140 beschrieben.

Die Viskosität des Bestandteils (B) beträgt vorzugsweise 3 bis 300 000 mPa•s bei 25 °C, bevorzugt 100 bis 100 000 mPa•s bei 25 °C. Um bei Einsatz der vinylgruppenhaltigen Reaktionsprodukte (2) bis (5) als Bestandteil (B) die gewünschte niedrige Viskosität zu erreichen, können vinylgruppenhaltige Ester (1) in Mengen von 0 bis 100 Gew.%, bezogen auf das Gesamtgewicht an vinylgruppenhaltigen Reaktionsprodukten (2) bis (5), sowie nicht reaktive Lösungsmittel zugegeben werden.

Der Bestandteil (B) wird in solchen Mengen eingesetzt, daß in der erfindungsgemäßen Zusammensetzung vorzugsweise 0,5 bis 2,0 Vinylgruppen der Formel (II), bevorzugt 0,8 bis 1,2 Vinylgruppen der Formel (II), je Mercaptoalkylgruppe der Formel (I), enthalten sind.

Der Bestandteil (C) in der erfindungsgemäßen Zusammensetzung ist ein basisches Katalysatorsystem, das eine starke organische Base ausgewählt aus der Gruppe der quaternären Ammoniumhydroxide, quaternären Ammoniumalkoxide, tertiären, sekundären und primären Amine enthält, die mit einer schwachen Protonensäure mit einem $pK_s$-Wert von vorzugsweise größer als 2, gepuffert wird.

Bevorzugte Beispiele für quaternäre Ammoniumhydroxide sind Trimethylbenzylammoniumhydroxid, Trimethylcetylammoniumhydroxid, Tetraethylammoniumhydroxid und Tetrabutylammoniumhydroxid. Die quaternären Ammoniumbasen können auch in Form ihrer Alkoxide, gegebenenfalls als Lösung im entsprechenden Alkohol, wie beispielsweise Trimethylbenzylammoniummethoxid in Methanol, eingesetzt werden.

Beispiele für tertiäre, sekundäre und primäre Amine sind Butylamin, Cyclohexylamin, 1,3-Diaminopropan, 1,10-Diaminodecan, Dibutylamin, Triethylamin, Piperidin, 2-Aminopyridin, N,N-Dimethylanilin, 1,4-Diazabicyclooctan (DABCO), 1,5-Diazabicyclo[4,3,0]non-5-en (DBN) und 1,8-Diazabicyclo[5,4,0]undec-7-en (DBU).

Beispiele für Protonensäuren mit einem pKs-Wert von größer als 2 sind aliphatische Carbonsäuren, wie Ameisensäure, Essigsäure, Propionsäure, Adipinsäure und Ascorbinsäure, Kohlensäure und schwefelige Säure. Flüchtige organische Säuren, wie Ameisensäure, Essigsäure oder Propionsäure sind besonders bevorzugt, da sie bei der Aushärtung leicht entfernt werden können.

Der Bestandteil (C) wird vorzugsweise gelöst in einem polaren Lösungsmittel, wie beispielsweise ein Alkanol kurzer bis mittler Kettenlänge, wobei Ethanol oder Isopropanol bevorzugt verwendet werden, eingesetzt.

Die Menge an schwacher organischer Säure und starker organischer Base im Bestandteil (C) hat Auswirkungen auf die Verarbeitungszeit der warmehärtbaren Zusammensetzung ohne die Eigenschaften des gehärteten Films wesentlich zu beeinflussen.

Starke organische Base, z.B. quaternäres Ammoniumhydroxid, und schwache Protonensäure, z.B. aliphatische Carbonsäure, werden bevorzugt in stöchiometrischen Mengen eingesetzt. Um die Verarbeitungszeit der wärmehärtbaren Zusammensetzung zu verlängern, wird die schwache Protonensäure auch bevorzugt in überstöchiometrischen Mengen, bis zum 10-fachen equivalenten Säureüberschuß, eingesetzt. Basenüberschuß ist zwar möglich, aber nicht bevorzugt, da die wärmehärtbaren Zusammensetzungen dann zu schnell reagieren und die Verarbeitungszeiten dann äußerst kurz sind.

Der Bestandteil (C) wird vorzugsweise in Mengen von 0,01 bis 10 Gew.-%, bevorzugt 0,05 bis 1 Gew.-%, jeweils bezogen auf das jeweilige Gesamtgewicht der Bestandteile (A) und (B), eingesetzt.

Zusätzlich zu den Bestandteilen (A), (B) und (C) können die erfindungsgemäßen Zusammensetzungen weitere Bestandteile enthalten. Beispiele für solche weiteren Bestandteile sind Lösungsmittel, z.B. Methylethylketon, Methylisobutylketon, Ethylenglykol, Xylolisomerengemische, Toluol, aromatenhaltige technische Erdöldestillate, wie Kristallöl 30, ein im Handel erhältliches Gemisch aus 83 % Alkanen und 17 % Aromaten, wobei dieses Gemisch einen Siedebereich von 145° bis 190° C bei 1020 hPa (abs.) hat, oder Gemische aus mindestens zwei derartiger Lösungsmittel, Pigmente, wie Titandioxid, Bariumsulfat, anorganische und organische Farbstoffe, Verlaufshilfsstoffe und Streckmittel.

Die Härtung der erfindungsgemäßen Zusammensetzung kann unter milden Bedingungen durchgeführt werden. Die Härtung der erfindungsgemäßen Zusammensetzung erfolgt bevorzugt durch 15 bis 60 Minuten langes Erwärmen bei 60 bis 80° C. Die Härtung kann aber auch bei tieferen Temperaturen bis zu 20° C erfolgen, die Härtungsdauer verlängert sich dann dementsprechend. Die Härtung kann auch durch Anwendung höherer Temperaturen bis zu 200° C beschleunigt werden.

Die Zusammensetzung wird vorzugsweise zur Herstellung von harten und benzinfesten Überzügen verwendet. Sie ist beispielsweise als Zweikomponentensystem, die Bestandteile (A) und (C) als die eine Komponente und der Bestandteil (B) als die zweite Komponente, anwendbar. Die Bestandteile bzw. Komponenten der erfindungsgemäßen Zusammensetzung werden vor der Verwendung gemischt, auf die zu beschichtende Oberfläche aufgetragen und durch Warme gehärtet.

Beispiele für Oberflächen, auf welche die erfindungsgemäßen Überzüge aufgebracht werden können, sind diejenigen von Metallen, wobei die Metalle mit einem Primer, einer Grundierung oder einem Farblack überzogen sein können, Kunststoffen, Holzprodukten und keramischen Werkstoffen.

Das Auftragen der erfindungsgemäßen Zusammensetzung auf die zu überziehenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravurüberzugsvorrichtung, Messer-oder Rakelbeschichtung.

Beispiel 1:

a) 90 g 3-Mercaptopropylmethyldimethoxysilan werden mit 200 g Toluol verdünnt und unter Zugabe von 7,20 g Wasser und 0,50 g Natriumcarbonat unter Rückfluß erhitzt. Sobald die Gasraumtemperatur den Siedepunkt von Methanol erreicht, wird das Methanol über eine Kolonne abdestilliert. Die rückständige Lösung wird filtriert, das Toluol bei 5 hPa (abs.) destillativ entfernt und von dem Rückstand mit Xylol eine 60 %ige Lösung hergestellt. Es wird eine Lösung mit einer Viskosität von 3,6 $mm^2 \cdot s^{-1}$ bei 25° C von einem Organopolysiloxan aus 3-Mercaptopropylmethysiloxaneinheiten mit einem HS-Equivalentgewicht von 238 erhalten.

b) 1,15 g (0,019 Mol) Eisessig in 78,85 g Isopropanol werden mit 20 g einer 25 %igen Lösung von Tetrabutylammoniumhydroxid (0,019 Mol) in Methanol verrührt. Nach Abklingen der leicht positiven Wärmetönung ist die Katalysatorlösung gebrauchsfertig. Es wird eine 6 %ige Lösung von Tetrabutylammoniumacetat in Isopropanol erhalten.

c) 2,34 g der unter a) beschriebenen Lösung des 3-Mercaptopropylmethylpolysiloxans werden mit 1,10 g Trimethylolpropantrimethacrylat und 10 Tropfen der, unter b) beschriebenen, Katalysatorlösung vermischt. Die Klarlacklösung wird auf Erichsenstahl gerakelt und nach dem Ablüften bei 80° C 30 Minuten lang eingebrannt. Der gehärtete Film hat die in Tabelle 1 zusammengestellten Eigenschaften.

Tabelle 1:

| | |
|---|---|
| Bleistifthärte[1] | 4H |
| MEK-Doppelriebe[4] | 70 |
| Benzintest (30 min/25 °C)[5] | keine Anlösespuren |

[1] nach Wolff-Wilborn
[4] Resistenz gegen Methylethylketon bei 30 µ Trockenfilmstärke
[5] Beständigkeit gegen Superbenzin: Ein mit Superbenzin getränkter Wattebausch wird 30 Minuten lang bei 25 °C auf den gehärteten Film gelegt.

Beispiel 2:

a) Die unter a) von Beispiel 1 beschriebene Arbeitsweise wird wiederholt mit der Abänderung, daß 196 g (1 Mol) 3-Mercaptopropyltrimethoxysilan anstelle von 90 g 3-Mercaptopropylmethyldimethoxysilan, 18 g (1 Mol ) Wasser anstelle von 7,20 g und 1,0 g Natriumcarbonat anstelle von 0,50 g eingesetzt werden. Es wird ein hochviskoses Harz aus 3-Mercaptopropylsiloxaneinheiten mit einem HS-Equivalentgewicht von 235 erhalten, von dem mit einem Xylolgemisch eine 60 %ige Lösung mit einer Viskosität von 4,2 $mm^2 \cdot s^{-1}$ bei 25 °C hergestellt wird.

b) 3,30 g der Lösung des 3-Mercaptopropylpolysiloxans, die wie in Beispiel 1 unter a) beschrieben hergestellt wurde, werden mit 1,70 g Neopentylglykoldimethacrylat und 10 Tropfen der Katalysatorlösung, die wie in Beispiel 1 unter b) beschrieben hergestellt wurde, vermischt. Die Klarlacklösung wird auf Erichsenstahl gerakelt und unter den in Tabelle 2 beschriebenen Bedingungen gehärtet. Die Eigenschaften des gehärteten Films sind in Tabelle 2 zusammengefaßt.

Tabelle 2:

| Aushärtung | | MEK-Doppelriebe[4] | Benzintest[5] |
|---|---|---|---|
| Zeit | Temperatur | | (30 min/25 °C) |
| (min) | (°C) | | |
| 30 | 60 | 18 | keine Anlösespuren |
| 30 | 80 | 80 | keine Anlösespuren |
| 20 | 140 | >100 | keine Anlösespuren |

[4] Resistenz gegen Methylethylketon bei 30 µ Trockenfilmstärke
[5] Beständigkeit gegen Superbenzin: Ein mit Superbenzin getränkter Wattebausch wird 30 Minuten lang bei 25 °C auf den gehärteten Film gelegt.

Beispiel 3:

a) Ein Reaktionsprodukt aus Acrylsäure und einem epoxidgruppenhaltigen Copolymerisat aus Styrol, Glycidylmethacrylat und Dimethylmaleinat wird, wie in Beispiel I von DE-A 35 41 140 unter A 1) beschrieben, hergestellt. Es wird eine Lösung mit einem Festkörpergehalt von 30 % und einem Acryl-Equivalentgewicht von 2000 erhalten.

b) 4,0 g dieser, unter a) beschriebenen, 30 %igen Lösung eines acrylgruppenhaltigen, organischen Harzes und 0,48 g der Lösung eines 3-Mercaptopropylpolysiloxans, die wie in Beispiel 2 unter a) beschrieben hergestellt wurde, werden zusammen mit 10 Tropfen der, in Beispiel 1 unter b) beschriebenen, Katalysatorlösung gemischt. Die Lacklösung wird auf Erichsenstahl gerakelt und bei 80 °C 30 Minuten lang

eingebrannt. Es wird ein klarer Film erhalten, der die in Tabelle 3 zusammengefaßten Eigenschaften hat.

Tabelle 3:

| | |
|---|---|
| Bleistifthärte[1] | H |
| Benzintest (30 min/25 ° C)[5] | keine Anlösespuren |

[1] nach Wolff-Wilborn
[5] Beständigkeit gegen Superbenzin: Ein mit Superbenzin getränkter Wattebausch wird 30 Minuten lang bei 25 ° C auf den gehärteten Film gelegt.

Beispiel 4:

a) Ein Gemisch aus 19,6 g 3-Mercaptopropyltrimethoxysilan, 72,1 g 3-Mercaptopropylmethyldimethoxysilan und 49,6 g Phenyltrimethoxysilan wird mit 200 g Toluol verdünnt und unter Zugabe von 14,9 g Wasser und 0,5 g Natriumcarbonat unter Rückfluß erhitzt. Sobald die Gasraumtemperatur den Siedepunkt von Methanol erreicht, wird das Methanol über eine Kolonne abdestilliert. Die rückständige Lösung wird filtriert, das Toluol bei 5 hPa (abs.) destillativ entfernt und von dem Rückstand mit Xylol eine 60 %ige Lösung hergestellt. Es wird eine Lösung von einem Organopolysiloxan aus 3-Mercaptopropylsiloxaneinheiten, 3-Mercaptopropylmethylsiloxaneinheiten und Phenylsiloxaneinheiten mit einer Viskosität von 5,3 $mm^2 \cdot s^{-1}$ bei 25 ° C und einem HS-Equivalentgewicht von 340 erhalten.

b) Es wird ein roter Basislack durch Dispergieren der folgenden Komponenten in der Perlmühle bei 6000 U/min hergestellt:
150,0 g30 %ige Lösung des acrylgruppenhaltigen, organischen Harzes, die wie in Beispiel 3 unter a) beschrieben hergestellt wurde,
2,5 g Bentone 34-Paste (10 %ig in Xylol), ein Thixotropiermittel, erhältlich bei Kronos-Titan
12,0 g Sicominrot K 3030 S, ein Farbpigment, erhältlich bei der BASF AG
0,3 g Siliconöl L 054, ein Verlaufshilfsmittel, erhältlich bei der Wacker-Chemie GmbH
2,0 g Xylol
2,0 g Ethylglykolacetat

Der rote Basislack enthält 75 mval Acrylgruppen. Er wird mit 25,8 g der Lösung des 3-mercaptopropylgruppenhaltigen Organopolysiloxans, die wie oben unter a) beschrieben hergestellt wurde, und 6,75 g der, in Beispiel 1 unter b) beschriebenen, Katalysatorlösung zum anwendungsfertigen Lack abgemischt und hat bei 25 ° C eine Gelzeit von ca. 3 Tagen. Gehärtet wird der Lack durch 30 Minuten langes Einbrennen bei 80 ° C. Der gehärtete Lack hat die in Tabelle 4 zusammengefaßten Eigenschaften.

Tabelle 4:

| | |
|---|---|
| Bleistifthärte[1] | 3H |
| Benzintest (30 min/25 ° C)[5] | keine Anlösespuren |
| Glanz (60 ° )[6] | 94 % |

[1] nach Wolff-Wilborn
[5] Beständigkeit gegen Superbenzin: Ein mit Superbenzin getränkter Wattebausch wird 30 Minuten lang bei 25 ° C auf den gehärteten Film gelegt.
[6] Reflexionsanteil in % bei einem Lichteinstrahlwinkel von 60 ° .

Beispiel 5:

a) 90 g eines Phenylmethylpolysiloxans mit 14 Gew.-% Si-gebundenen Methoxygruppen (unter der Handelsbezeichnung SY 231 bei der Wacker-Chemie GmbH erhältlich) werden mit 98 g 3-Mercaptopropyltrimethoxysilan, 3 g Eisessig und 10 ml Wasser 3 Stunden lang unter kräftigem Sieden equilibriert und dann alle flüchtigen Bestandteile bei 80° C und 5 hPa destillativ entfernt. Es werden 162 g einer klaren farblosen Flüssigkeit mit einer Viskosität von 140 $mm^2 \cdot s^{-1}$ erhalten.

b) 100 g der 60 %igen Lösung des, wie in Beispiel 3 unter a) beschriebenen, acrylgruppenhaltigen organischen Harzes in Xylol, 32 g des, oben unter a) beschriebenen, 3-mercaptopropylgruppenhaltigen Organopolysiloxans und 10 ml Xylol werden homogen gemischt. Entsprechend der Tabelle 5 werden verschiedene Mengen der, in Beispiel 1 unter b) beschriebenen, Katalysatorlösung und verschiedene Mengen Eisessig zu der Mischung zugegeben, wobei die Mengen in g/100 g acrylgruppenhaltiges organisches Harz (bezogen auf die obige 60 %ige Lösung) angegeben sind. Die Lacklösung wird jeweils auf Erichsenstahl aufgerakelt. Die jeweiligen Härtungsbedingungen sowie die jeweiligen Eigenschaften des gehärteten Filmes sind der Tabelle 5 zu entnehmen.

Tabelle 5:

| | Härtungsbedingungen | | | | | | | | | |
|---|---|---|---|---|---|---|---|---|---|---|
| | 0,5 h/60°C | | | | | 0,5 h/80°C | | | | |
| Mischung | a | b | c | d | e | a | b | c | d | e |
| Katalysatorlösung0) | - | 2 | 2 | 2 | 5 | - | 2 | 2 | 2 | 5 |
| Eisessig0) | - | - | 1 | 2 | 4 | - | - | 1 | 2 | 4 |
| Gelzeit bei 25°C (h) | >24 | 2 | 12 | >24 | 12 | >24 | 2 | 12 | >24 | 12 |
| Bleistifthärte1) | 6B | H | H | H | H | 6B | H | H | H | H |
| T-Bendtest2) | 1 | 3 | 3 | 3 | 3 | 1 | 3 | 4 | 3 | 4 |
| Gitterschnitt3) | Gt0 | Gt0- | Gt0 | Gt0 | Gt0 | Gt0 | Gt0-Gt1 | Gt0- | Gt0 | Gt0 |
| MEK-Doppelriebe4) | 1 | 14 | 13 | 7 | 15 | 1 | 17 | 19 | 17 | 22 |
| Benzintest5) | - | ++ | ++ | ++ | ++ | - | ++ | ++ | ++ | ++ |

0) g/100 g acrylgruppenhaltiges organisches Harz (60 %-ige Lösung)

1) nach Wolff-Wilborn

2) bestimmt nach ASTM 4145, ermittelt wird die Filmflexibilität bei Substratbiegung um 180°C, je kleiner der Wert, desto flexibler der Lackfilm

3) bestimmt nach DIN 53 151, ermittelt wird die Kombination Lackhaftung und Filmflexibilität bei Ritzbeanspruchung, in der Skala Gt0 bis Gt4 ist Gt0 der beste Wert

4) Resistenz gegen Methylethylketon bei 30 µ Trockenfilmstärke, je größer der Wert, desto größer die Resistenz

5) Beständigkeit gegen Superbenzin: Ein mit Superbenzin getränkter Wattebausch wird 30 Minuten lang bei 25°C auf den gehärteten Film gelegt.
- = Film deutlich angelöst
++ = keine Anlösespuren auf dem Film

Ohne Katalysatorzusatz (Mischung a) vernetzt der Lack selbst bei 80°C nicht. Ein Katalysatorzusatz von 0,13 Gew.-% (Gew.-% lösungsmittelfreies Tetrabutylammoniumacetat, bezogen auf das Gesamtgewicht an mercaptoalkylgruppenhaltigem Organopolysiloxan und lösungsmittelfreiem, acrylgruppenhaltigen organischen Harz) wie bei der Mischung b, führt selbst bei einer Härtungstemperatur von 60°C schon zu vernetzten, harten und zugleich flexiblen Filmen. Ohne wesentliche Änderung der Eigenschaften des

gehärteten Films läßt sich die Verarbeitungszeit des flüssigen Lackgemisches durch Zusatz von Eisessig verlängern.

Beispiel 6:

Die Lackmischungen b und d aus Beispiel 5 werden nach Ablüften bei 80 °C 30 Minuten lang gehärtet. Ein Tag bzw. neun Tage danach wird die Pendelhärte nach König gemäß DIN 53 157 gemessen, wobei die Dämpfungszeit des Pendels von 6° auf 3° Auslenkung bestimmt wird. Je größer der Wert der Pendelhärte, desto geringer die Dämpfung, desto härter der Lackfilm.

Die Ergebnisse sind in Tabelle 6 zusammengefaßt.

Tabelle 6:

| | Pendelhärte (sec.) | |
|---|---|---|
| | nach 1 Tag | nach 9 Tagen |
| Mischung b | 89 | 130 |
| Mischung d | 78 | 134 |

**Ansprüche**

1. Wärmehärtbare Zusammensetzungen enthaltend als wesentliche Bestandteile

(A) mindestens eine mercaptoalkylgruppenhaltige Verbindung, die je Molekül mindestens 2 SiC-gebundene Reste der allgemeinen Formel

$HS\text{-}R^2\text{-}$ (I),

wobei $R^2$ ein zweiwertiger Kohlenwasserstoffrest mit 1 bis 8 Kohlenstoffatom(en) je Rest bedeutet, enthält, ausgewählt aus der Gruppe bestehend aus mercaptoalkylgruppenhaltigem Organopolysiloxan und Cokondensat von mercaptoalkylgruppenhaltiger, kondensationsfähige Gruppen aufweisender Organosiliciumverbindung und Hydroxylgruppen aufweisender, organischer Verbindung

(B) mindestens eine mit dem Bestandteil (A) verträgliche vinylgruppenhaltige Verbindung, die je Molekül mindestens zwei Gruppen der allgemeinen Formel

$R^4CH=CR^3C(O)O\text{-}$ (II),

wobei $R^3$ ein Wasserstoffatom oder ein Methylrest und $R^4$ ein Wasserstoffatom oder ein Alkylrest mit 1 bis 3 Kohlenstoffatom(en) je Rest bedeutet,

enthält, und

(C) eine Mischung aus einer starken organischen Base ausgewählt aus der Gruppe der quaternären Ammoniumhydroxide, quaternären Ammoniumalkoxide, tertiären, sekundären und primären Amine und einer schwachen Protonensäure

2. Wärmehärtbare Zusammensetzungen nach Anspruch 1, dadurch gekennzeichnet, daß als mercaptoalkylgruppenhaltige Verbindung (A) mercaptoalkylgruppenhaltiges Organopolysiloxan aus durchschnittlichen Einheiten der allgemeinen Formel

$$R_a(R^1O)_b(HSR^2)_cSiO_{\frac{4-(a+b+c)}{2}} \quad (III),$$

wobei R gleich oder verschieden ist und einen einwertigen Kohlenwasserstoffrest mit 1 bis 8 Kohlenstoffatom(en) je Rest bedeutet,

$R^1$ gleich oder verschieden ist und ein Wasserstoffatom oder einen Alkylrest mit 1 bis 6 Kohlenstoffatom(en) je Rest bedeutet,

$R^2$ einen zweiwertigen Kohlenwasserstoffrest mit 1 bis 8 Kohlenstoffatom(en) je Rest bedeutet,
a 0, 1, 2 oder 3, durchschnittlich 0,0 bis 2,0,
b 0, 1 oder 2, durchschnittlich 0,0 bis 2,0,
c 0, 1 oder 2, durchschnittlich 0,05 bis 1,0,
und die Summe a + b + c kleiner als 4, durchschnittlich die Summe a + b höchstens 2,0 ist,
mit der Maßgabe, daß mindestens 2 Reste der Formel $HS\text{-}R^2\text{-}$ je Molekül enthalten sind,
verwendet wird.

3. Wärmehärtbare Zusammensetzungen nach Anspruch 1, dadurch gekennzeichnet, daß als mercaptoalkylgruppenhaltige Verbindung (A) solche ausgewählt aus der Gruppe bestehend aus Cokondensat, das aus einem mercaptoalkylgruppenhaltigem Silan der allgemeinen Formel
$R_d(HSR^2)Si(OR^1)_{3-d}$ (IV),
wobei R gleich oder verschieden ist und einen einwertigen Kohlenwasserstoffrest mit 1 bis 8 Kohlenstoffatom(en) je Rest bedeutet,
$R^1$ gleich oder verschieden ist und ein Wasserstoffatom oder einen Alkylrest mit 1 bis 6 Kohlenstoffatom(en) je Rest bedeutet,
$R^2$ einen zweiwertigen Kohlenwasserstoffrest mit 1 bis 8 Kohlenstoffatom(en) je Rest bedeutet und
d 0, 1 oder 2 ist,
und einer, mit dem mercaptoalkylgruppenhaltigem Silan homogen kondensierbaren, organischen Verbindung, die Hydroxylgruppen aufweist, hergestellt wurde, und Cokondensat, das aus einem mercaptoalkylgruppenhaltigen Organopolysiloxan aus durchschnittlichen Einheiten der allgemeinen Formel

$$R_a(R^1O)_b(HSR^2)_cSiO_{\frac{4-(a+b+c)}{2}} \quad (III),$$

wobei R, $R^1$ und $R^2$ die oben dafür angegebene Bedeutung haben,
a 0, 1, 2 oder 3, durchschnittlich 0,0 bis 2,0,
b 0, 1 oder 2, durchschnittlich 0,0 bis 2,0,
c 0, 1 oder 2, durchschnittlich 0,05 bis 1,0,
und die Summe a + b + c kleiner als 4, durchschnittlich die Summe a + b höchstens 2,0 ist,
und einer, mit diesem Organopolysiloxan homogen kondensierbaren, organischen Verbindung, die Hydroxylgruppen aufweist, hergestellt wurde,
verwendet wird.

4. Wärmehärtbare Zusammensetzung nach Anspruch 1, dadurch gekennzeichnet, daß als vinylgruppenhaltige Verbindung (B) solche ausgewählt aus der Gruppe der
(1) Ester von mehrwertigen Alkoholen und $\alpha,\beta$-ungesättigten Carbonsäuren der allgemeinen Formel
$R^4CH=CR^3C(O)OH$ (II'),
wobei $R^3$ ein Wasserstoffatom oder ein Methylrest und $R^4$ ein Wasserstoffatom oder ein Alkylrest mit 1 bis 3 Kohlenstoffatom(en) je Rest bedeutet,
(2) Reaktionsprodukte von $\alpha,\beta$-ungesättigten Carbonsäuren der allgemeinen Formel
$R^4CH=CR^3C(O)OH$ (II'),
wobei $R^3$ und $R^4$ die oben dafür angegebene Bedeutung haben, und OH-gruppenhaltigen organischen Polymeren ausgewählt aus der Gruppe der
(a) OH-gruppenhaltigen Polyether oder Polyester und
(b) OH-gruppenhaltige Copolymerisate von Hydroxyalkylestern der Acrylsäure oder Methacrylsäure, Styrol und gegebenenfalls Alkylestern von $\alpha,\beta$-ungesättigten Mono- oder Dicarbonsäuren
(3) Reaktionsprodukte von $\alpha,\beta$-ungesättigten Carbonsäuren der allgemeinen Formel
$R^4CH=CR^3C(O)OH$ (II'),
wobei $R^3$ und $R^4$ die oben dafür angegebene Bedeutung haben, und epoxidgruppenhaltigen Copolymerisaten von Epoxyalkylestern der Acrylsäure oder Methacrylsäure, Styrol und gegebenenfalls Alkylestern von $\alpha,\beta$-ungesättigten Mono- oder Dicarbonsäuren
(4) Reaktionsprodukte von Hydroxyalkylestern von $\alpha,\beta$-ungesättigten Carbonsäuren der allgemeinen Formel
$R^4CH=CR^3C(O)OH$ (II'),
wobei $R^3$ und $R^4$ die oben dafür angegebene Bedeutung haben, und isocyanatgruppenhaltigen organischen Polymeren oder Polyurethanen
(5) Reaktionsprodukte von Isocyanatoalkylestern von $\alpha,\beta$-ungesättigten Carbonsäuren der allgemeinen

Formel
$R^4CH=CR^3C(O)OH$ (II'),
wobei $R^3$ und $R^4$ die oben dafür angegebene Bedeutung haben, und OH-gruppenhaltigen organischen Polymeren, und
(6) Mischungen von (1) und einem der Reaktionsprodukte (2) bis (5),
verwendet wird.

5. Wärmehärtbare Zusammensetzung nach Anspruch 4, dadurch gekennzeichnet, daß als Ester (1) von mehrwertigen Alkoholen und $\alpha,\beta$-ungesättigten Carbonsäuren solcher ausgewählt aus der Gruppe von 1,4-Butandioldiacrylat, Neopentylglycoldiacrylat, 1,6-Hexandioldiacrylat, Trimethylolpropantriacrylat, Pentaerythrittriacrylat und Pentaerythrittetraacrylat verwendet wird.

6. Wärmehärtbare Zusammensetzung nach Anspruch 4, dadurch gekennzeichnet, daß als Reaktionsprodukt (3) von $\alpha,\beta$-ungesättigter Carbonsäure und epoxidgruppenhaltigem Copolymerisat ein Reaktionsprodukt von Acrylsäure oder Methacrylsäure und einem epoxidgruppenhaltigen Copolymerisat, das durch Copolymerisation von Glycidylmethacrylat mit Styrol und Dimethylmaleinat hergestellt wurde, verwendet wird.

7. Wärmehärtbare Zusammensetzungen nach einem der Ansprüche 1 bis 6, dadurch gekennzeichnet, daß als Komponente (C) eine Mischung aus einem quaternären Ammoniumhydroxid ausgewählt aus der Gruppe von Trimethylbenzylammoniumhydroxid, Trimethylcetylammoniumhydroxid, Tetraethylammoniumhydroxid und Tetrabutylammoniumhydroxid und einer organischen Carbonsäure ausgewahlt aus der Gruppe von Ameisensäure, Essigsäure und Propionsäure verwendet wird.

8. Verfahren zur Herstellung von wärmehartbären Überzügen, dadurch gekennzeichnet, daß Gemische, die als wesentliche Bestandteile
(A) mindestens eine mercaptoalkylgruppenhaltige Verbindung, die je Molekül mindestens 2 SiC-gebundene Reste der allgemeinen Formel
$HS-R^2-$ (I),
wobei $R^2$ ein zweiwertiger Kohlenwasserstoffrest mit 1 bis 8 Kohlenstoffatom(en) je Rest bedeutet, enthält, ausgewählt aus der Gruppe bestehend aus mercaptoalkylgruppenhaltigem Organopolysiloxan und Cokondensat von mercaptoalkylgruppenhaltiger, kondensationsfähige Gruppen aufweisender Organosiliciumverbindung und Hydroxylgruppen aufweisender, organischer Verbindung
(B) mindestens eine mit dem Bestandteil (A) verträgliche, vinylgruppenhaltige Verbindung, die je Molekül mindestens zwei Gruppen der allgemeinen Formel
$R^4CH=CR^3C(O)O-$ (II),
wobei $R^3$ ein Wasserstoffatom oder ein Methylrest und $R^4$ ein Wasserstoffatom oder ein Alkylrest mit 1 bis 3 Kohlenstoffatom(en) je Rest bedeutet,
enthält, und
(C) eine Mischung aus einer starken organischen Base ausgewählt aus der Gruppe der quaternären Ammoniumhydroxide, quaternären Ammoniumalkoxide, tertiären, sekundären und primären Amine und einer schwachen Protonensäure
enthalten, auf die zu beschichtenden Oberflächen aufgetragen werden und durch Wärme gehärtet werden.